# EUROPÄISCHE PATENTSCHRIFT

(11) **EP 3 119 915 B1**
(45) Veröffentlichungstag und Bekanntmachung des Hinweises auf die Patenterteilung: **13.12.2017**
(21) Anmeldenummer: 15711070.1
(22) Anmeldetag: 09.03.2015
(51) Int. Cl.: C21C 5/46, B22D 41/12, B22D 46/00, B22D 45/00, F27D 21/00, F27B 14/20, C21C 5/52, F27B 14/08, F27D 19/00

(54) **METALLURGISCHER BEHÄLTER**
METALLURGICAL CONTAINER
RÉCIPIENT MÉTALLURGIQUE

(30) Priorität: 20.03.2014 EP 14160813
(43) Veröffentlichungstag der Anmeldung: 25.01.2017
(73) Patentinhaber: Primetals Technologies Austria GmbH, 4031 Linz (AT)
(72) Erfinder: LEHOFER, Martin, Plainsboro, NJ 08536 (US); ROHRHOFER, Andreas, A-4020 Linz (AT); HARTL, Franz, 4720 Kallham (AT); KLEIN, Jean-Pierre, A-1210 Wien (AT); WEINZINGER, Michael, 4501 Neuhofen a.d.Krems (AT)
(74) Vertreter: Metals@Linz
(86) Internationale Anmeldenummer: PCT/EP2015/054806
(87) Internationale Veröffentlichungsnummer: WO 2015/139981

(56) Entgegenhaltungen:
- EP-A2- 2 119 989

## Beschreibung

Die Erfindung betrifft einen metallurgischen Behälter, insbesondere einen Behälter zur Aufnahme von Schmelze.

Ein solcher metallurgischer Behälter kommt in Heißbereichen eines Industriewerkes, wie eines Stahlwerkes, zum Einsatz, um heiße Flüssigkeiten wie Roheisenschmelze, Stahlschmelze, flüssige Schlacke, Schrott oder dergleichen zu transportieren. Dabei weist ein solcher metallurgischer Behälter eine extreme Temperaturabstrahlung auf.

Um Abläufe, wie Transport-, Automatisierungs- und Prozessabläufe in einem Werk zu verbessern, ist es erforderlich, den Weg und/oder die Position solcher als Transportbehälter dienender metallurgischer Behälter jederzeit zu kennen.

EP 2 119 989 A2 offenbart eine Halterung für ein elektrisches Bauteil mit hoher thermischer Isolierfähigkeit. Die Halterung ist insbesondere zur Montage an Schmelztiegeln für die Metallverarbeitung vorgesehen.

WO 2014/024955 A1 offenbart ein System zur Messung einer Temperatur geschmolzenen, aus einem Gießtiegel zu gießenden Metalls.

US 2003/0080105 A1 offenbart einen Brennofen mit einem Steuerkasten, der elektronische Steuerkomponenten enthält.

WO 2011/101138 A1 offenbart eine Überwachungseinrichtung für Schiebeverschlüsse, Gießrohrwechsler oder dergleichen an einer Gießpfanne oder einem ähnlichen metallurgischen Gefäß, wobei die Einrichtung mit einer Elektronik zur Erfassung der im Gießbetrieb funktionswichtigen Parameter der überwachten Vorrichtung versehen ist.

EP 2 423 674 A2 offenbart ein Verfahren und eine Vorrichtung zur Temperatur- und spektroskopischen Analysenbestimmung von flüssigen Metallbädern und Schlacken in einem kippbaren metallurgischen Gefäß.

WO 95/25818 A1 offenbart eine Stütze für ein Sauerstoff-Konvertergefäß zur Umwandlung von Eisen zu Stahl mit einem Tragring, der durch eine Tropfkante vor geschmolzenem Metall geschützt ist.

Der Erfindung liegt die Aufgabe zugrunde, einen metallurgischen Behälter anzugeben, welcher einfach und sicher dauerhaft identifiziert werden kann.

Die Aufgabe wird erfindungsgemäß durch einen metallurgischen Behälter mit den Merkmalen des Anspruchs 1 gelöst.

Vorteilhafte Ausgestaltungen der Erfindung sind Gegenstand der Unteransprüche.

Der erfindungsgemäße metallurgische Behälter umfasst eine Außenwandung, mindestens ein Anschlusselement für eine anzuschließende Elektrode und/oder ein anzuschließendes Tragelement und mindestens einen Transponder, der von einem Schutzgehäuse umgeben ist und drahtlos auslesbar ist, wobei der Transponder beabstandet von der Außenwandung in einer von außen zugänglichen Öffnung im Anschlusselement angeordnet ist.

Eine solche von der Außenwandung des metallurgischen Behälters beabstandete Anordnung ermöglicht, dass das Schutzgehäuse weitgehend nur Strahlungswärme vom metallurgischen Behälter ausgesetzt ist und nur geringe Wärme über Wärmeleitung in das Schutzgehäuses des Transponders eindringt. Durch die erfindungsgemäße beabstandete Anordnung des Transponders vom metallurgischen Behälter kann der Transponder über eine längere Zeit sicher betrieben werden. Anstatt wie bisher eine Elektronik in derartigen thermischen Umwelteinflüssen nur für kurze Zeiten rein manuell oder periodisch in gewissen Abständen zu betreiben, erlaubt die Erfindung eine dauerhafte und kostengünstige Identifizierung des metallurgischen Behälters in rauen und heißen Umgebungen. Insbesondere wird ein solcher metallurgischer Behälter in einem Umfeld mit hoher Temperaturabstrahlung, wie beispielsweise Konvertern im Stahlwerk oder in Drehrohröfen bei der Zementherstellung, verwendet. Durch die Anordnung des Transponders in einer von außen zugänglichen Öffnung im Anschlusselement ist der Transponder zusätzlich vor mechanischen Beschädigungen und auch vor Wärmestrahlung geschützt. Zudem ist die Montage vereinfacht.

Eine mögliche Ausführungsform sieht vor, dass zumindest ein Abstandshalter vorgesehen ist, der zwischen der Außenwandung und dem Schutzgehäuse eines Transponders angeordnet ist. Hierdurch ist der Transponder im Wesentlichen nur einer Wärmeabstrahlung und nicht einer starken Wärmeleitung wie bei einer üblichen direkten und bündigen Anordnung auf dem Behälter selbst ausgesetzt.

Eine Weiterbildung der Erfindung sieht vor, dass ein Transponder variabel beabstandet an der Außenwandung angeordnet ist. Hierdurch kann die Wärmeleitung in den Transponder entsprechend minimiert werden. Vorzugsweise ist der Abstandshalter als eine Gewindestange ausgebildet. Dies ermöglicht eine einfache Einstellung des Abstands zwischen dem Transponder und der Außenwandung des metallurgischen Behälters.

Bei einer weiteren Ausgestaltung der Erfindung ist der Abstandshalter geteilt, wobei zwischen zwei Abstandshalterteilen ein Isolierelement angeordnet ist. Insbesondere ist das Isolierelement als ein insbesondere hitzebeständiges Reflektor- und/oder Dämmelement, insbesondere als eine Isolatorplatte aus Kork, Holz, Glasfaserwerkstoff, Borosilikatglas, Ton oder einem anderen keramischen Stoff, ausgebildet, welche die Wärmestrahlung reflektieren und/oder schlecht wärmeleitend sind.

Zur weiteren Minimierung der thermischen Beanspruchung des Transponders ist die Außenwandung zumindest bereichsweise mit einem Reflektormaterial, wie zum Beispiel Borosilikatglas, Aluminium, und/oder einem schlecht wärmeleitenden Isoliermaterial, wie zum Beispiel Kork, Glasfaserwerkstoff, Holz, versehen. Dabei kann das Reflektor- und/oder Isoliermaterial in Form einer Beschichtung oder einer Imprägnierung aufgebracht sein.

Zusätzlich kann die Außenwandung des Gehäuses zumindest bereichsweise mit einer materialabweisenden Beschichtung versehen sein. Insbesondere ist die Außenwandung des Gehäuses und gegebenenfalls auch die Wandung des Schutzgehäuses des Transponders mit der materialabweisenden, insbesondere abperlenden Beschichtung, wie zum Beispiel eine sogenannte Nano-Beschichtung oder Glasbeschichtung, versehen, so dass die heiße Flüssigkeit abrinnt (wie beim "Lotus-Effekt") und eine mögliche Hitzeeinwirkung nur von kurzer Dauer ist und nicht zum vom Schutzgehäuse umgebenden Transponder vordringt.

Eine weitere Ausgestaltung der Erfindung sieht vor, dass das Schutzgehäuse mit einem Reflektormaterial und/oder einem Isoliermaterial versehen ist. Vorzugsweise ist das Reflektor- und/oder Isoliermaterial der Außenwandung des Gehäuses und/oder des Schutzgehäuses hitzebeständig, insbesondere bis zu einer Temperatur von mindestens 150°C, besonders von mindestens 250°C, 280°C, 300°C oder 350°C beständig. Vorzugsweise ist das Reflektor- und/oder Isoliermaterial feuerfest und feuerbeständig und weist sehr gute Flammwiderstands- und/oder Isoliereigenschaften auf. Zudem ist das Schutzgehäuse aus einem solchen Material gebildet, dass es zumindest für Funkwellen zur drahtlosen Kommunikation durchlässig ist. Mit anderen Worten: Neben den guten thermischen Reflektor- und/oder Isoliereigenschaften des Materials des Schutzgehäuses ist dieses Material für Funkwellen durchlässig. Hierzu werden insbesondere hitzebeständige Kunststoffe, wie Polytetrafluorethylen, Polyphenylensulfid, Silikon-Kautschuk, Polyimid, Ethylen-Propylen-Copolymer, Cyclo-Olefin-Copolymer, Polyetherimid, Polyethersulfon, Polyhdroxyalkanoat, Polyhydroxybutyrat, Plysulfon, oder ein Gemisch zumindest zweier dieser Stoffe verwendet.

Eine weitere Ausgestaltung sieht vor, dass das Schutzgehäuse in Richtung einer Aufnahmeöffnung des metallurgischen Behälters mit einer Schutzabdeckung versehen ist. Hierdurch ist die Oberseite des Schutzgehäuses vor Spritzern der im Behälter aufgenommenen Flüssigkeit beim Transport und vor weiteren mechanischen Beanspruchungen geschützt. Vorzugsweise weist die Schutzabdeckung eine Tropfkante auf, so dass übertretende Flüssigkeit ablaufen kann.

Des Weiteren kann vorgesehen sein, dass die Außenwandung des metallurgischen Behälters mit mindestens einem Tragelement, insbesondere eine metallische Tragplatte, versehen ist, an welchem das Schutzgehäuse des Transponders lösbar befestigt ist. Hierdurch ist die Montage und Demontage des Transponders am metallurgischen Behälter vereinfacht.

Eine weitere Ausführungsform sieht vor, dass der Transponder in einer Einbuchtung des Schutzgehäuses eingebettet ist. Dies hat den Vorteil, dass das Schutzgehäuse bildende Platten plan aufeinander liegen und somit wenig Verbund-, insbesondere Klebstoff, zum Verbinden der beiden Platten notwendig ist und somit wenig Wärme eindringt.

Alternativ oder zusätzlich zum Transponder kann im Schutzgehäuse eine Elektronik, insbesondere zur Temperaturmessung, zur Messung von weiteren physikalischen Größen, wie Druck, Bewegung, Beschleunigung, zur Verarbeitung und/oder Übertragung von gemessenen physikalischen Größen und/oder zum Erfassen eines Verschleißes angeordnet sein. Darüber hinaus kann die Elektronik und/oder der Transponder mittels eines ebenso integrierten Energiespeichers oder mittels eines Peltier-Elements auf Basis des Seebeck-Effekts oder kontaktlos mittels induktiver, kapazitiver oder elektromagnetischer Energieübertragung mit Energie versorgt werden. Alternativ kann der Transponder und/oder die Elektronik auch drahtgebunden mit Energie versorgt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Ausführungsbeispiel für einen metallurgischen Behälter mit einem an dessen Außenwandung angeordneten Transponder,
- FIG 2: ein Ausführungsbeispiel für einen in einem Schutzgehäuse eingebetteten Transponder,
- FIG 3: in Explosionsdarstellung ein weiteres Ausführungsbeispiel für einen in einem Schutzgehäuse einbettbaren Transponder,
- FIG 4: in vergrößerter Darstellung ein Ausführungsbeispiel für eine Anordnung eines Transponders an einer Außenwandung eines metallurgischen Behälters,
- FIG 5: in vergrößerter Darstellung ein weiteres Ausführungsbeispiel für eine Anordnung eines Transponders an einer Außenwandung eines metallurgischen Behälters,
- FIG 6: in Schnittdarstellung ein Ausführungsbeispiel für einen im Schutzgehäuse eingebetteten Transponder,
- FIG 7: in Seitenansicht ein Ausführungsbeispiel für eine Schutzabdeckung für einen im Schutzgehäuse eingebetteten Transponder,
- FIG 8: in Seitenansicht ein weiteres Ausführungsbeispiel für eine Schutzabdeckung für einen im Schutzgehäuse eingebetteten Transponder,
- FIG 9: in perspektivischer Darstellung ein weiteres Ausführungsbeispiel eines metallurgischen Behälters mit einem im Anschlusselement angeordneten Transponder, und
- FIG 10-12: in verschiedenen Ansichten jeweils ein Ausführungsbeispiel für einen im Anschlusselement angeordneten Transponder.

Einander entsprechende Teile sind in allen Figuren mit den gleichen Bezugszeichen versehen.

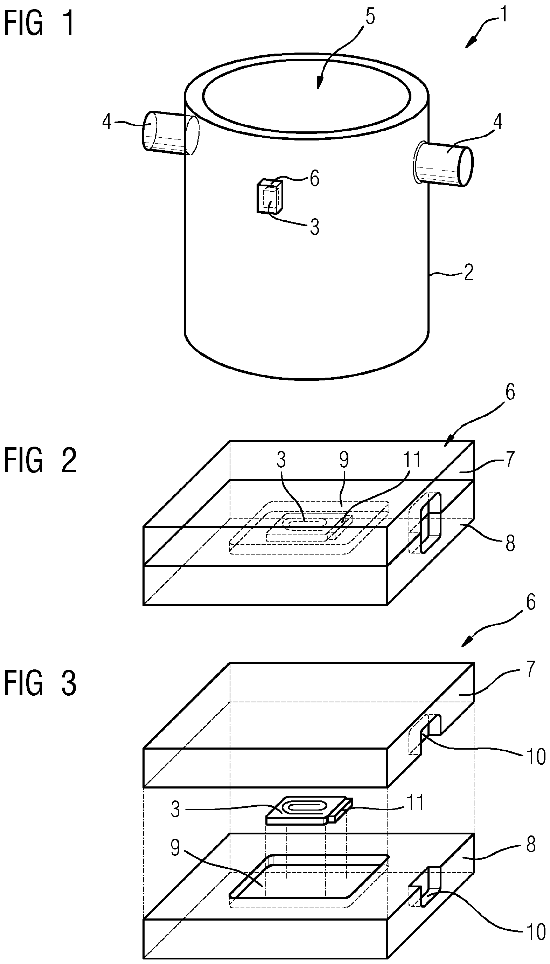

FIG 1 zeigt ein Ausführungsbeispiel für einen erfindungsgemäßen metallurgischen Behälter 1. Bei dem metallurgischen Behälter 1 handelt es sich insbesondere um einen Transportbehälter in Heißbereichen eines Industriewerkes, wie eines Stahlwerkes, um heiße Flüssigkeiten, wie Roheisenschmelze, Stahlschmelze, flüssige Schlacke zu transportieren. Dabei durchläuft der metallurgische Behälter 1 verschiedene Routen zwischen Anlagenteilen des Industriewerkes und wird den betreffendem Anlagenteil zugestellt zur Verwendung des transportierten Mittels. Der metallurgische Behälter 1 wird im Weiteren kurz Behälter 1 genannt.

Zur Identifizierung des Behälters 1 umfasst dieser an seiner Außenwandung 2 einen Transponder 3, der drahtlos auslesbar ist. Alternativ oder zusätzlich zum Transponder 3 kann eine Elektronik, insbesondere zur Messung weitere physikalischer Größen, wie Druck, Temperatur, Beschleunigung, und/oder zur Signalverarbeitung und/oder zur Datenübertragung, außen an der Außenwandung 2 des Behälters 1 angeordnet sein. Im Weiteren wird die Erfindung anhand des am Behälter 1 angeordneten Transponders 3 beschrieben. Die Erfindung ist analog für die zusätzliche oder alternative Anordnung einer Elektronik am Behälter 1 anwendbar.

Zusätzlich weist der Behälter 1 mindestens ein Anschlusselement 4 auf. Im Ausführungsbeispiel nach FIG 1 umfasst der Behälter 1 zwei Anschlusselemente 4 in Form von zwei seitlichen und insbesondere einander gegenüberliegenden Anschlagmitteln oder Tragzapfen.

Nach oben hin ist der Behälter 1 offen zur Aufnahme eines flüssigen Mediums, wie einer Schmelze oder Schlacke, und weist eine Aufnahmeöffnung 5 auf.

Der Transponder 3 ist von einem Schutzgehäuse 6 umgeben. Bei dem Transponder 3 kann es sich beispielsweise um einen sogenannten herkömmlichen RFID-Transponder (RFID = radiofrequency identification) oder einen SAW-Transponder (SAW = Surface Acoustic Waves) handeln, mittels welchem automatisch und berührungslos der Behälter 1 identifiziert und dessen Position bestimmt und lokalisiert werden kann und/oder mittels einer Elektronik ermittelte physikalische Größen und/oder ermittelte Signale ausgelesen werden können. Es kann aber auch jeder andere Transponder, der eine eindeutige Identifizierung und Lokalisierung des Behälters 1 ermöglicht, eingesetzt werden.

Der Transponder 3 kann sowohl als passiver RFID-Transponder mit einer Stromversorgung durch Induktion der auslesenden Antenne als auch als aktiver RFID-Transponder mit eingebetter Stromversorgung, z.B. einer Pufferbatterie, ausgeführt sein. Ist der Transponder 3 als aktiver RFID-Transponder ausgeführt, kann zusätzlich ein Temperatursensor 11 im Schutzgehäuse 6 angeordnet sein, dessen Messwerte zyklisch oder nach Übermittlung eines entsprechenden Lesesignals erfasst werden und in einen im Transponder 3 vorgesehenen Speicher geschrieben werden. Dieser Speicher kann dann über eine am Behälter 1 entlang geführten Empfänger mit Empfangsantenne ausgelesen werden.

Ist der Transponder 3 alternativ als ein SAW-Sensor ausgeführt, kann dieser so eingerichtet sein, dass die Temperatur die Modulierung/Phasenverschiebung des auszulesenden Signals beeinflusst und als ein eindeutiges Merkmal zusätzlich zur Identifizierung des Behälters 1 und dessen Position ausgelesen werden kann.

Der Einsatz des drahtlosen Transponders 3 hat den Vorteil, dass die Identifizierung des Behälters 1 ohne aufwendige wartungsintensive bisher übliche Kamerasysteme erfolgen kann und dass eine dauerhafte und eine lange Lebensdauer währende Identifizierung möglich ist.

FIG 2 zeigt ein Ausführungsbeispiel für den in dem Schutzgehäuse 6 eingebetteten Transponder 3. Das Schutzgehäuse 6 gemäß FIG 2 ist aus zwei Platten 7 und 8 gebildet. Die Platten 7 und 8 sind aus einem insbesondere thermisch isolierenden Isoliermaterial gebildet, welches beispielsweise in der älteren Europäischen Anmeldung EP 13 161 049.5 näher beschrieben ist. Das Schutzgehäuse 6 hat den Vorteil, dass der Transponder 3 vor mechanischer und/oder thermischer Beanspruchung, insbesondere vor Hitzestrahlung, Staub und/oder Spritzern aus flüssigem Metall und/oder Schlacke, geschützt ist.

Das Isoliermaterial des Schutzgehäuses 6 des Transponders 3 hat den Vorteil, dass im Betrieb des Behälters 1 hohe Außentemperaturen und somit eine hohe Strahlungswärme des Behälters 1 (Abwärme) nur langsam zu einer Erwärmung des Transponders 3 führen.

Alternativ kann der Transponder 3 in nicht näher dargestellter Art und Weise auch in einem Isoliermaterial, insbesondere einem schaumförmigen oder flüssigen Material, das bei Luftkontakt erstarrt, eingegossen sein.

Die Einbettung des Transponders 3 in das plattenförmige Schutzgehäuse 6 erfolgt durch eine in eine der Platten 7 oder 8 eingearbeitete Einbuchtung 9. Im Ausführungsbeispiel nach Figur 3 ist die Einbuchtung 9 in die untere Platte 8 eingearbeitet.

Wie in FIG 2 gezeigt, können hierdurch die außerhalb der Einbuchtung 9 oberflächenseitig eben ausgebildeten Platten 7 und 8 bündig aneinander liegen, so dass die Platten 7 und 8 stoffschlüssig, insbesondere mittels eines Klebstoffes, miteinander fest verbunden werden. Bei dem Klebstoff handelt es sich insbesondere um einen schlecht temperaturleitenden Klebstoff. Die Verklebung der Platten 7 und 8 ermöglicht eine einfache Fertigung des Schutzgehäuses 6. Zudem kann aufgrund des schlecht temperaturleitenden Klebstoffs nur schwer Wärme in das Innere des Schutzgehäuses 6 und somit zum Transponder 3 dringen.

Der Transponder 3 ist in der Einbuchtung 9 insbesondere lösbar gehalten, um in einem späteren Fehlerfall diesen zerstörungsfrei entnehmen und analysieren zu können.

Des Weiteren sind die Platten 7 und 8 mit Einkerbungen 10 an zumindest einer der Kantenseite versehen. Hierdurch kann später mit entsprechendem Werkzeug derart in die Einkerbungen 10 eingegriffen werden, dass die Platten 7 und 8 gelöst oder gespalten werden können. Der lösbar in der Einbuchtung 9 angeordnete Transponder 3 kann dann einfach und zerstörungsfrei entnommen werden.

Wie oben bereits ausgeführt, kann im Schutzgehäuse 6 weitere Elektronik angeordnet sein. Insbesondere kann zusätzlich zum Transponder 3 mindestens ein Temperatursensor 11 angeordnet sein. Bei einer Ausführung des Schutzgehäuses 6 als transparentes Gehäuse kann der Temperatursensor 11 derart eingerichtet sein, dass dieser bei einer gegebenen Umgebungstemperatur eine entsprechende Farbe aufweist. Dadurch kann beim Ausfall des Transponders 3 ermittelt werden, ob die höchstzulässige Temperatur des Transponders 3 erreicht wurde. Somit kann in einfacher Art und Weise bei einem Versagen des Transponders 3 das Auftreten der maximalen Innentemperatur ermittelt werden.

Wie oben bereits ausgeführt, können aufgrund der Einkerbungen 10 die Platten 7 und 8 voneinander getrennt werden, ohne den innen liegenden Temperatursensor 11 und den Transponder 3 zu beschädigen.

FIG 3 zeigt in Explosionsdarstellung den in dem Schutzgehäuse 6 einzubettenden Transponder 3.

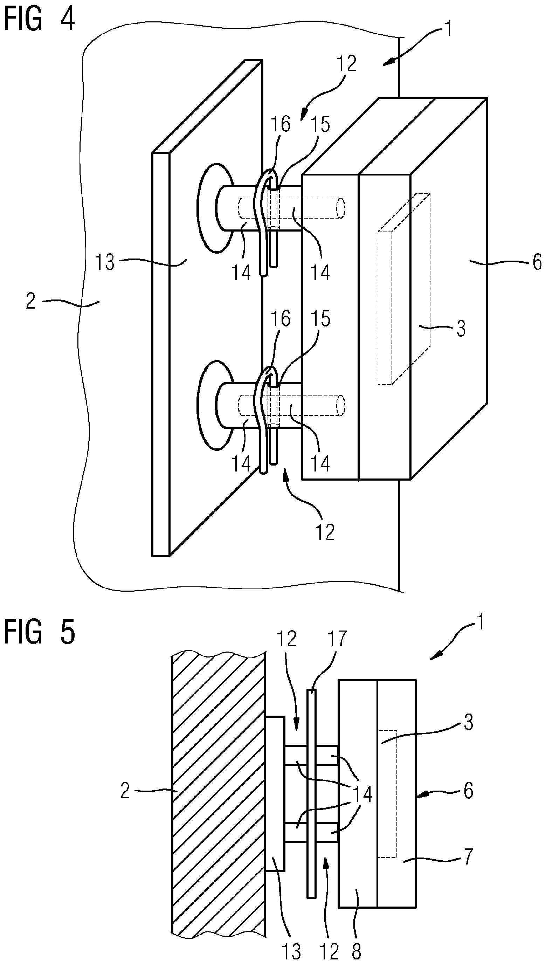

FIG 4 zeigt in vergrößerter Darstellung ein Ausführungsbeispiel für eine Anordnung des Transponders 3 an der Außenwandung 2 des Behälters 1. Dabei ist, wie gezeigt, der Transponder 3 nicht bündig am Behälter 1, sondern von diesem beabstandet am Behälter 1 angeordnet. Hierdurch ist ein Wärmeeintrag infolge von Wärmeleitung in das Schutzgehäuse 6 minimiert.

Hierzu ist das Schutzgehäuse 6 mittels Abstandshalter 12 an der Außenwand 2 des Behälters 1 gehalten. Für eine variable Einstellung des Abstandes zwischen dem Schutzgehäuse 6 und dem Behälter 1 sind die Abstandshalter 12 als Gewindestangen ausgeführt.

Dabei können die Abstandshalter 12 zur weiteren Minimierung des Wärmeeintrages in das Schutzgehäuse 6 aus dem gleichen thermisch isolierenden Material wie das Schutzgehäuse 6 ausgeführt sein. Durch die Beabstandung des Schutzgehäuses 6 von der Außenwandung 2 des Behälters 1 ist der Transponder 3 und dessen Schutzgehäuse 6 im Wesentlichen nur der Strahlungswärme des Behälters 1 ausgesetzt.

Zusätzlich kann vorgesehen sein, dass im Bereich der Fixierung des Schutzgehäuses 6 am Behälter 1 ein Tragelement 13 beispielsweise in Form einer Metallplatte oder einer faserverstärkten Kunststoffplatte angeordnet ist. Der Behälter 1 selbst ist im Allgemeinen aus einem hitzebeständigen Metall gefertigt, so dass das Tragelement 13 in Form einer Metallplatte am Behälter 1 angeschweißt wird.

Vorzugsweise wird die Befestigung des Schutzgehäuses 6 am Behälter 1 derart ausgeführt, dass diese werkzeugfrei gelöst werden kann und dass diese weitgehend geschlossen ist zur Vermeidung von Schmutzeintrag. Hierzu ist beispielsweise vorgesehen, dass der jeweilige Abstandshalter 12 aus zwei ineinander steckbaren Bolzen 14 gebildet ist, die jeweils mindestens eine Durchgangsöffnung 15 aufweisen. Die Bolzen 14 werden dabei derart zueinander angeordnet, dass deren Durchgangsöffnungen 15 übereinander liegen. Durch die Durchgangsöffnungen 15 des inneren und äußeren Bolzens 14 kann dann ein Steckelement 16, insbesondere ein Steckfederelement, geführt und gehalten, insbesondere gesteckt sein.

Es können in Längsausrichtung der Bolzen 14 mehrere Durchgangsöffnungen 15 vorgesehen sein, so dass der Abstand zwischen Außenwandung 2 und Schutzgehäuse 6 variabel eingestellt werden kann.

Einer der Bolzen 14 ist an der Außenwandung 2, insbesondere an dem Tragelement 13 form-, kraft- und/oder stoffschlüssig befestigt, insbesondere geschweißt oder geklebt. Der andere Bolzen 14 ist am Schutzgehäuse 6 form-, kraft- und/oder stoffschlüssig befestigt, insbesondere geschweißt oder geklebt.

Zusätzlich kann sowohl die Außenwandung 2 als auch das Schutzgehäuse 6 oder nur einer von beiden mit einer Wärme isolierenden und/oder Wärme reflektierenden Beschichtung versehen sein.

FIG 5 zeigt in vergrößerter Darstellung ein alternatives Ausführungsbeispiel für eine Anordnung eines Transponders 3 an einer Außenwandung 2 eines Behälters 1. Zusätzlich zur Beabstandung des Schutzgehäuses 6 von der Außenwandung 2 mittels der Abstandshalter 12 ist ein Isolierelement 17 vorgesehen. Hierbei ist der Abstandshalter 12 aus geteilten Bolzen 14 gebildet, zwischen denen das Isolierelement 17 angeordnet ist.

Das Isolierelement 17 ist zwischen der Außenwandung 2 des Behälters 1 und der in Richtung des Behälters 1 weisenden Rückwand des Schutzgehäuses 6 angeordnet. Dabei kann das Isolierelement 17 aus einem Reflektormaterial gebildet sein, so dass vom Behälter 1 abstrahlende Wärme reflektiert wird und nicht auf das Schutzgehäuse 6 strahlt.

Insbesondere ist das Isolierelement 17 zumindest teilweise oder bereichsweise, insbesondere auf der dem Behälter 1 zugewandten Oberflächenseite mit einem Reflektormaterial versehen. Alternativ kann das Isolierelement 17 vollständig aus dem Reflektormaterial gebildet sein oder aus einem schlecht wärmeleitenden Isoliermaterial mit einer Reflektorbeschichtung oder weiteren Alternativen aus einer Kombination von Reflektormaterial und/oder Isoliermaterial gebildet sein.

Das Reflektormaterial ist insbesondere ein durch sintern gebundener Glasfaserwerkstoff, ein Borosilikatglas, ein Ton oder ein anderer keramischer Stoff oder eine Kombination aus diesen. Das Isoliermaterial ist insbesondere ein Kork, ein Holz, ein Kunststoff, ein keramischer Stoff, ein Glasfaserwerkstoff oder ein anderer geeigneter Stoff oder eine Kombination aus diesen.

Das Schutzgehäuse 6 ist insbesondere aus einem solchen Material gefertigt, dass es für elektromagnetische Wellen im Frequenzbereich des Transponders 3 durchlässig ist. Auch kann das Schutzgehäuse 6 zumindest aus einem Isoliermaterial und/oder im Außenbereich aus einem Reflektormaterial gebildet sein.

Das Reflektormaterial des Isolierelements 17 und/oder des Schutzgehäuses 6 ermöglicht in besonders einfacher Art und Weise, dass Wärmeabstrahlungen vom Behälter 1 und/oder der Umgebung vor einem Eindringen in das Isoliermaterial des Schutzgehäuses 6 reflektiert werden.

Das Reflektormaterial des Isolierelements 17 kann aus einem solchen Material gefertigt sein, dass es elektromagnetische Wellen im Frequenzbereich des Transponders 3 in Richtung weg vom Behälter 1 reflektiert oder für diese Wellen mit geringer Dämpfung durchlässig ist.

Wird aus Kostengründen ein Reflektormaterial verwendet, dass weniger thermisch isolierend ist, sondern etwas speichernd ist, dann kann zwischen dem Reflektormaterial und dem Isoliermaterial bei einem mehrschichtigen Aufbau des Isolierelements 17 oder zwischen dem Reflektormaterial und dem Schutzgehäuse 6 ein Abstand vorgesehen sein, um einen Wärmeeintrag in das Schutzgehäuse 6 infolge von Wärmeleitung zu minimieren.

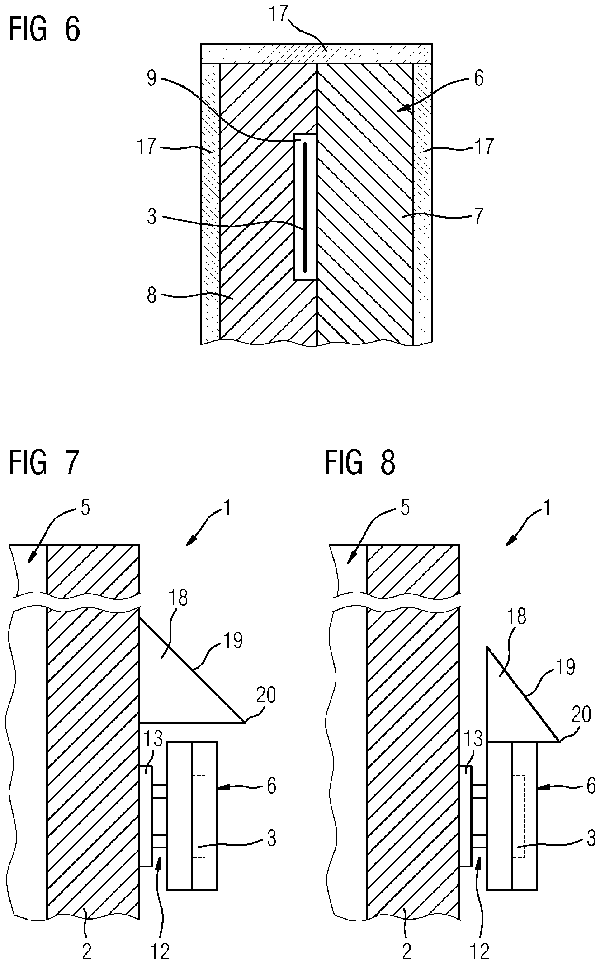

FIG 6 zeigt in Schnittdarstellung ein weiteres Ausführungsbeispiel für einen im Schutzgehäuse 6 eingebetteten Transponder 3. In diesem Ausführungsbeispiel ist der Transponder 3 vom Isolierelement 17 vollständig umgeben in Art einer Ummantelungsschicht. Hierdurch kann der Wärmeeintrag infolge von Wärmestrahlung von anderen weiteren Gefäßen und/oder der Umgebung minimiert werden.

Auch kann das Schutzgehäuse 6 mit verschiedenen Reflektormaterialien versehen werden. So kann auf der in Richtung des Behälters 1 weisenden Oberflächenseite des Schutzgehäuses 6 ein wärmeabweisendes und weniger Schmutz abweisendes, insbesondere ein sprödes Material aufgebracht sein, wohingegen auf der vom Behälter 1 wegweisenden und nach außen gerichteten Oberflächenseite des Schutzgehäuses 6 ein Schmutz abweisendes, insbesondere ein glattes Material (mit Lotus-Effekt) aufgebracht sein kann.

An Oberflächenseiten des Schutzgehäuses 6, welche insbesondere stark mechanisch und durch Schmutz, wie Spritzer und Staub, beansprucht sind, kann das Schutzgehäuse 6 aus einem Material ausgeführt sein, dass vergleichsweise zäh ist und bei direktem Kontakt mit Schlacke, Stahl- oder Eisenschmelze weitgehend hitzebeständig und hinreichend fest sowie abperlend ist, so dass keine mechanische Beschädigung eintritt und die Schlacke oder Schmelze leicht abfließt oder abtropft.

Wird aus Kostengründen ein spröder Stoff als Material für das Schutzgehäuse 6 eingesetzt, so kann ein Reflektorstoff, wie in der älteren EP 13 161 049.5 beschrieben, verwendet werden.

FIG 7 zeigt in Seitenansicht ein Ausführungsbeispiel für eine Schutzabdeckung 18 für einen im Schutzgehäuse 6 eingebetteten Transponder 3 mit einem Abstandshalter 12 zur beabstandeten Befestigung an der Außenwandung des Behälters 1. Die Schutzabdeckung 18 ist in Richtung der Aufnahmeöffnung 5 des Behälters 1 auf das Schutzgehäuse 6 und somit oberhalb von diesem angeordnet. Die Schutzabdeckung 18 weist eine von der Aufnahmeöffnung 5 des Behälters 1 und vom Schutzgehäuse 6 weg geneigte Schräge 19 auf, deren unteres Ende insbesondere über die Oberseite des Schutzgehäuse 6 hinaussteht und eine Abtropfkante 20 bildet. Die Abtropfkante 20 verhindert, dass flüssige Schlacke oder Schmelze beim Abtropfen über die Schutzabdeckung 18 auf das Schutzgehäuse 6 zurückfließt, insbesondere bei einer leichten Neigung des Behälters 1 zum Beispiel beim Transport.

In FIG 7 ist die Schutzabdeckung 18 an der Außenwandung 2 befestigt und mit einem geringen Abstand zur Oberseite des Schutzgehäuses 6 angeordnet.

FIG 8 zeigt in Seitenansicht ein weiteres Ausführungsbeispiel für eine Schutzabdeckung 18, die auf dem Schutzgehäuse 6 des eingebetteten Transponders 3 angeordnet und befestigt ist.

Das Schutzgehäuse 6 mit dem eingebetteten Transponder 3 ist an einer Stelle des Behälters 1 angebracht, an dem sowohl die auftretende Abwärme als auch die Gefahr durch mechanische Beanspruchungen weitgehend gering ist.

Zudem werden für eine einfache und sichere Auslesung des Transponders 3 die Antennenpositionen der Ausleseantennen in der Umgebung berücksichtigt. Aus diesem Grunde kann die Anordnung und Befestigung des Schutzgehäuses 6 mit dem Transponder 3 lösbar und verstellbar an der Außenwandung 2 des Behälters 1 angeordnet sein.

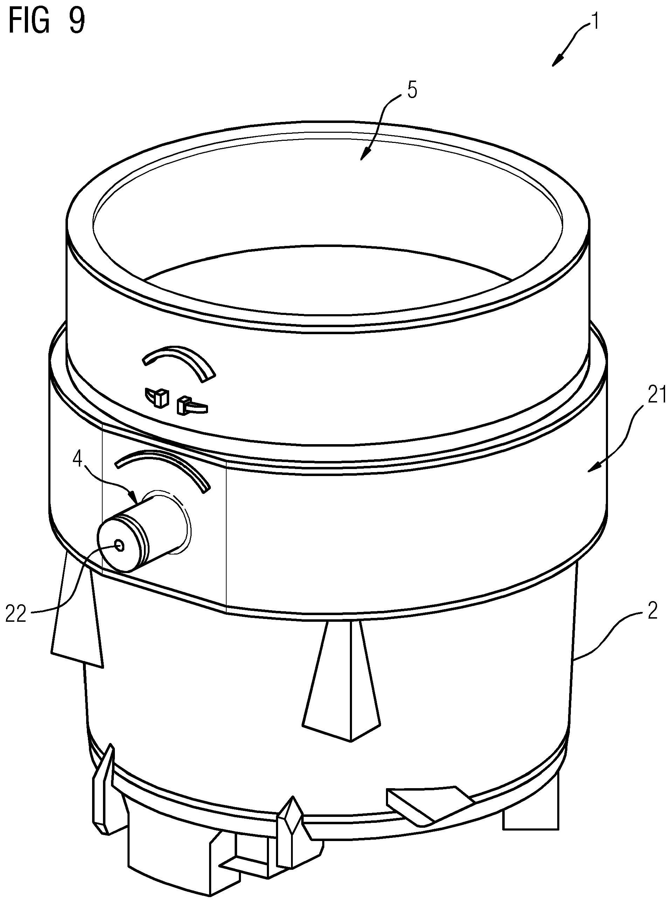

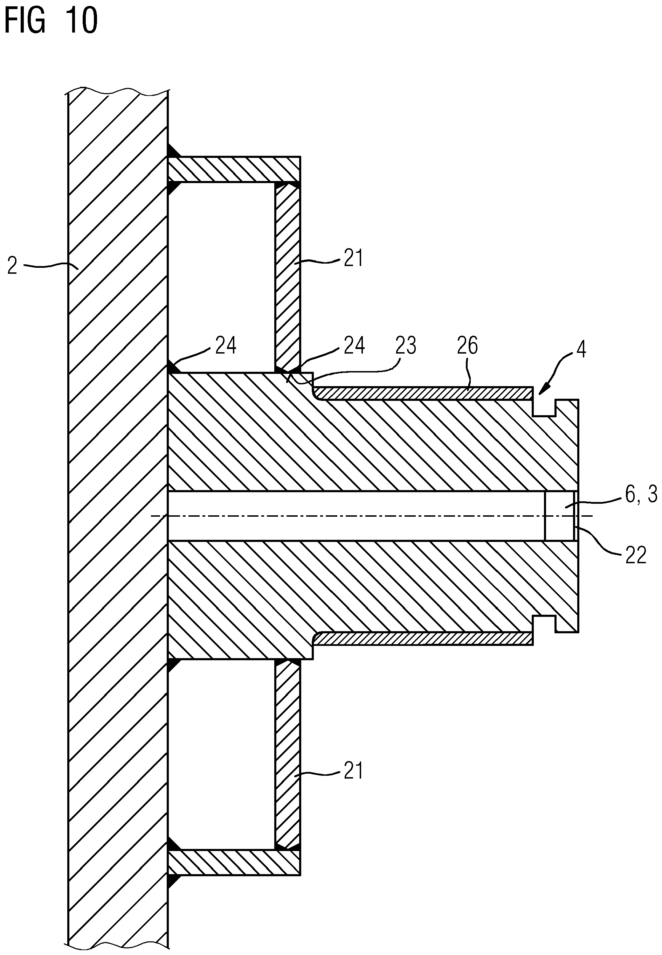

FIG 9 und FIG 10 zeigen in perspektivischer Darstellung bzw. Schnittdarstellung ein weiteres Ausführungsbeispiel eines Behälters 1 mit einem im Anschlusselement 4 angeordneten Transponder 3.

Der Behälter 1 weist unterhalb der Aufnahmeöffnung 5 ein umlaufendes Ringelement 21 auf, der beispielsweise kraft- und/oder formschlüssig an der Außenwandung 2 befestigt ist. Insbesondere kann das Ringelement 21 als ein Verstellring ausgebildet sein und lösbar am Behälter 1 angeordnet sein.

Oberflächenseitig ragt aus dem Ringelement 21 zumindest ein Anschlusselement 4 in Form eines Tragzapfens heraus. Das Anschlusselement 4 weist eine nach außen hin offene Öffnung 22 auf, in welcher der Transponder 3 angeordnet ist, wie in Figuren 10 bis 12 gezeigt. Das Anschlusselement 4 ist in einer Ausnehmung 23 des Ringelements 21 angeordnet und an Kontaktstellen 24 form-, kraft- und/oder stoffschlüssig befestigt, insbesondere geschweißt ist. Dabei erstreckt sich das Anschlusselement 4 durch das Ringelement 21 bis auf die Außenwandung 2, an welcher das Anschlusselement 4 an weiteren Kontaktstellen 24 form-, kraft- und/oder stoffschlüssig befestigt, insbesondere geschweißt ist.

Alternativ kann das Schutzgehäuse 6 lösbar an einem nicht näher dargestellten Tragelement angeordnet sein, dass ebenfalls lösbar und einstellbar an der Außenwandung 2 des Behälters 1 anordenbar ist.

Die Öffnung 22 erstreckt sich dabei im Wesentlichen über die gesamte Längsachse des Anschlusselements 4 in Form einer Durchgangsbohrung. Die Öffnung 22 dient dabei der Ausrichtung der Anschlusselemente 4 bei der Montage am Behälter 1.

Die Öffnung 22 ist darüber hinaus derart ausgebildet, dass diese das Schutzgehäuse 6 mit dem eingebetteten Transponder 3 aufnehmen kann. Dabei korrespondiert die Öffnung 22 im Wesentlichen mit den Abmessungen des Schutzgehäuses 6, so dass das Schutzgehäuse 6 vollständig in der Öffnung 22 versenkt ist und nicht aus der Öffnung 22 ragt. Hierdurch ist das Schutzgehäuse 6 vor mechanischer Beanspruchung geschützt, so dass mechanische Beschädigungen vermieden sind. Zudem kommt das Schutzgehäuse 6 auch nicht mit an der Außenwandung 2 abfließenden Spritzern, insbesondere Schlackenspritzern, in Kontakt.

Je nach Ausführungsform des Schutzgehäuses 6 kann dieses auch eine runde oder zylindrische Form aufweisen.

Zusätzlich kann das Anschlusselement 4 mit einer Beschichtung 26 versehen sein. Die Beschichtung 26 kann aus einem Isolier- und/oder Reflektormaterial oder einem Schmutz abweisenden Material gebildet sein.

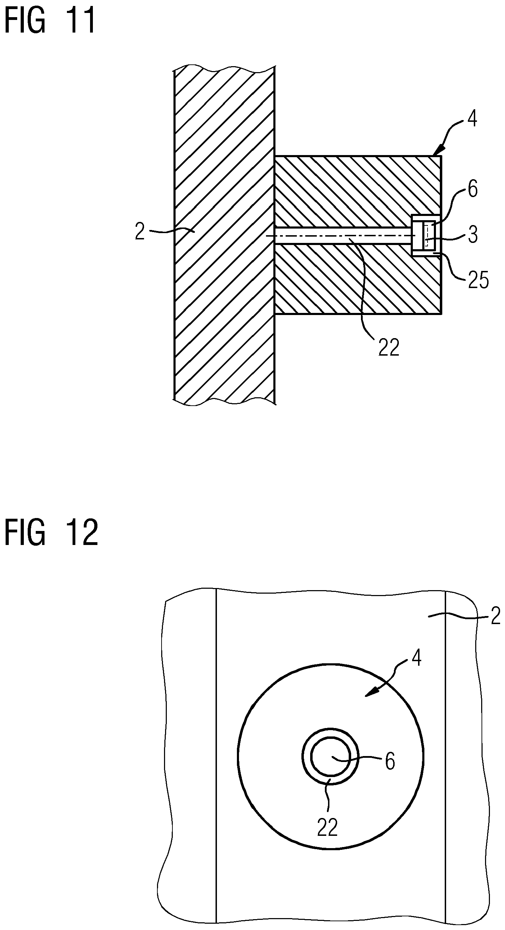

FIG 11 zeigt eine weitere Ausführungsform zur Aufnahme des Schutzgehäuses 6 im Anschlusselement 4. Hierbei ist ein nach außen gerichtetes Ende 25 der durchgehenden Öffnung 22 des Anschlusselements 4 aufgeweitet zur Aufnahme des Schutzgehäuses 6.

FIG 12 zeigt eine Ansicht von außen auf das Anschlusselement 4 in die Öffnung 22 mit dem darin angeordneten Schutzgehäuse 6.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Metallurgischer Behälter (1), umfassend
- eine Außenwandung (2),
- mindestens ein Anschlusselement (4) für eine anzuschließende Elektrode und/oder ein anzuschließendes Tragelement, und
- mindestens einen Transponder (3), der von einem Schutzgehäuse (6) umgeben ist und drahtlos auslesbar ist,
wobei der Transponder (3) beabstandet von der Außenwandung (2) am Behälter (1) in einer von außen zugänglichen Öffnung (22) im Anschlusselement (4) angeordnet ist.

2. Metallurgischer Behälter (1) nach Anspruch 1, wobei zumindest ein Abstandhalter (12) vorgesehen ist, der zwischen der Außenwandung (2) und dem Schutzgehäuse (6) eines Transponders (3) angeordnet ist.

3. Metallurgischer Behälter (1) nach Anspruch 2, wobei ein Transponder (3) variabel beabstandet an der Außenwandung (2) angeordnet ist.

4. Metallurgischer Behälter (1) nach Anspruch 2 oder 3, wobei der Abstandshalter (12) als eine Gewindestange ausgebildet ist.

5. Metallurgischer Behälter (1) nach einem der Ansprüche 2 bis 4, wobei der Abstandshalter (12) geteilt ist und zwischen zwei Abstandshalterteilen ein Isolierelement (17) angeordnet ist.

6. Metallurgischer Behälter (1) nach einem der vorhergehenden Ansprüche, wobei die Außenwandung (2) zumindest bereichsweise mit einem Reflektormaterial und/oder mit einem Isoliermaterial versehen ist.

7. Metallurgischer Behälter (1) nach einem der vorhergehenden Ansprüche, wobei die Außenwandung (2) zumindest bereichsweise mit einer materialabweisenden Beschichtung versehen ist.

8. Metallurgischer Behälter (1) nach einem der vorhergehenden Ansprüche, wobei das Schutzgehäuse (6) mit einem Reflektormaterial und/oder einem Isoliermaterial versehen ist.

9. Metallurgischer Behälter (1) nach einem der vorhergehenden Ansprüche, wobei das Schutzgehäuse (6) in Richtung einer Aufnahmeöffnung (5) des Behälters (1) mit einer Schutzabdeckung (18) versehen ist.

10. Metallurgischer Behälter (1) nach Anspruch 9, wobei die Schutzabdeckung (18) eine Tropfkante (20) aufweist.

11. Metallurgischer Behälter (1) nach einem der vorhergehenden Ansprüche, wobei die Außenwandung (2) mit mindestens einem Tragelement versehen ist, an welchem das Schutzgehäuse (6) des Transponders (3) lösbar befestigt ist.

12. Metallurgischer Behälter (1) nach einem der vorhergehenden Ansprüche, wobei der Transponder (3) in einer Einbuchtung (9) des Schutzgehäuses (6) angeordnet ist.

13. Metallurgischer Behälter (1) nach einem der vorhergehenden Ansprüche, wobei zusätzlich zum Transponder (3) eine Elektronik im Schutzgehäuse (6) angeordnet ist.

## Claims

1. Metallurgical container (1), comprising
- an outer wall (2),
- at least one connection element (4) for an electrode to be connected and/or a support element to be connected, and
- at least one transponder (3), which is surrounded by a protective housing (6) and can be read wirelessly,
wherein the transponder (3) is arranged at a distance from the outer wall (2) on the container (1) in an opening (22) in the connection element (4) accessible from outside.

2. Metallurgical container (1) according to claim 1, wherein at least one spacer (12) is provided, which is arranged between the outer wall (2) and the protective housing (6) of a transponder (3).

3. Metallurgical container (1) according to claim 2, wherein a transponder (3) is arranged at a variable distance from the outer wall (2).

4. Metallurgical container (1) according to claim 2 or 3, wherein the spacer (12) is embodied as a threaded rod.

5. Metallurgical container (1) according to one of the claims 2 to 4, wherein the spacer (12) is divided and an insulating element (17) is arranged between two parts of a spacer.

6. Metallurgical container (1) according to one of the preceding claims, wherein the outer wall (2), at least in some areas, is provided with a reflector material and/or with an insulating material.

7. Metallurgical container (1) according to one of the preceding claims, wherein the outer wall (2), at least in some areas, is provided with a repellent coating.

8. Metallurgical container (1) according to one of the preceding claims, wherein the protective housing (6) is provided with a reflector material and/or an insulating material.

9. Metallurgical container (1) according to one of the preceding claims, wherein the protective housing (6) is provided with a protective cover (18) in the direction of a receiving aperture (5) of the containers (1).

10. Metallurgical container (1) according to claim 9, wherein the protective cover (18) comprises a drip edge (20).

11. Metallurgical container (1) according to one of the preceding claims, wherein the outer wall (2) is provided with at least one support element, to which the protective housing (6) of the transponder (3) is fixed in a releasable manner.

12. Metallurgical container (1) according to one of the preceding claims, wherein the transponder (3) is arranged in a recess (9) of the protective housing (6).

13. Metallurgical container (1) according to one of the preceding claims, wherein in addition to the transponder (3) an electronics unit is arranged in the protective housing (6).

## Revendications

1. Récipient métallurgique (1), comprenant
- une paroi extérieure (2),
- au moins un élément de raccordement (4) destiné à une électrode à raccorder et/ou un organe de suspension à raccorder, et
- au moins un transpondeur (3), qui est entouré d'un capot de protection (6) et peut être lu sans fil, dans lequel le transpondeur (3) est agencé espacé par rapport à la paroi extérieure (2) au sein de l'élément de raccordement (4) au niveau du récipient (1) dans une ouverture (22) accessible de l'extérieur.

2. Récipient métallurgique (1) selon la revendication 1, dans lequel au moins une entretoise (12), qui est agencée entre la paroi extérieure (2) et le capot de protection (6) d'un transpondeur (3), est prévue.

3. Récipient métallurgique (1) selon la revendication 2, dans lequel un transpondeur (3) est agencé avec un espacement variable au niveau de la paroi extérieure (2).

4. Récipient métallurgique (1) selon la revendication 2 ou 3, dans lequel l'entretoise (12) est réalisée sous forme de tige filetée.

5. Récipient métallurgique (1) selon l'une quelconque des revendications 2 à 4, dans lequel l'entretoise (12) est divisée et un élément isolant (17) est agencé entre deux sections d'entretoise.

6. Récipient métallurgique (1) selon l'une quelconque des revendications précédentes, dans lequel la paroi extérieure (2) est munie au moins par secteur d'un matériau réflecteur et/ou d'un matériau isolant.

7. Récipient métallurgique (1) selon l'une quelconque des revendications précédentes, dans lequel la paroi extérieure (2) est munie au moins par secteur d'un revêtement antiadhésif.

8. Récipient métallurgique (1) selon l'une quelconque des revendications précédentes, dans lequel le capot de protection (6) est muni d'un matériau réflecteur et/ou d'un matériau isolant.

9. Récipient métallurgique (1) selon l'une quelconque des revendications précédentes, dans lequel le capot de protection (6) est muni d'une calotte de protection (18) en direction d'une ouverture de prélèvement (5) du récipient (1).

10. Récipient métallurgique (1) selon la revendication 9, dans lequel la calotte de protection (18) présente un bord d'égouttage (20).

11. Récipient métallurgique (1) selon l'une quelconque des revendications précédentes, dans lequel la paroi extérieure (2) est munie d'au moins un organe de suspension au niveau duquel le capot de protection (6) du transpondeur (3) est fixé amovible.

12. Récipient métallurgique (1) selon l'une quelconque des revendications précédentes, dans lequel le transpondeur (3) est agencé dans un renfoncement (9) du capot de protection (6).

13. Récipient métallurgique (1) selon l'une quelconque des revendications précédentes, dans lequel un circuit électronique est agencé dans le capot de protection (6) en plus du transpondeur (3).
